# EUROPÄISCHE PATENTSCHRIFT

(11) **EP 2 660 483 B1**
(45) Veröffentlichungstag und Bekanntmachung des Hinweises auf die Patenterteilung: **05.04.2017**
(21) Anmeldenummer: 13165906.2
(22) Anmeldetag: 30.04.2013
(51) Int. Cl.: F16B 12/26, F16B 12/46

(54) **ECKVERBINDUNG VON ZWEI BAUELEMENTEN**
CORNER JOINT OF TWO COMPONENTS
CONNEXION D'ANGLE DE DEUX ELEMENTS

(30) Priorität: 02.05.2012 DE 102012103831
(43) Veröffentlichungstag der Anmeldung: 06.11.2013
(73) Patentinhaber: Schulte, Guido, 59602 Rüthen-Meiste (DE)
(72) Erfinder: Schulte, Guido, 59602 Rüthen-Meiste (DE); Eschlbeck, Franz-Josef, 83209 Prien am Chiemsee (DE)
(74) Vertreter: Griepenstroh, Jörg

(56) Entgegenhaltungen:
- EP-A1- 0 976 889
- WO-A2-2011/151758
- DE-A1-102005 028 072
- US-A1- 2006 101 769

## Beschreibung

Die vorliegende Erfindung betrifft eine Verbindung zweier Bauelemente gemäß den Merkmalen im Oberbegriff von Patentanspruch 1.

Die vorliegende Erfindung betrifft weiterhin eine Verwendung einer Verbindung gemäß Patentanspruch 15.

Die vorliegende Erfindung betrifft weiterhin eine Fußleiste gemäß den Merkmalen im Oberbegriff von Patentanspruch 16.

Die vorliegende Erfindung betrifft weiterhin eine Schublade zur Anordnung in einem Möbel gemäß den Merkmalen im Oberbegriff von Patentanspruch 17.

Aus dem Stand der Technik sind Verbindungen von Bauelementen bekannt, die insbesondere im Möbelbau, ganz besonders bevorzugt im Schubladenbau eingesetzt werden. Hierzu werden zwei Seitenwände mittels Steckdübeln ineinander gesteckt und an einer Seitenwand ein Metalldübel eingeschraubt, der dann in der zweiten Seitenwand in ein Loch eingeführt wird und innerhalb dieses Loches mit einer Mutter befestigt wird. Ein solches System ist sehr robust, bedarf jedoch eines erhöhten Aufwandes bei der Montage sowie externen Werkzeuges, um die beiden Bauteile miteinander zu koppeln. Insbesondere bei Heimanwendungen, beispielsweise im Falle von Mitnahmemöbeln, ist ferner die Fähigkeit des anwendenden Monteurs gefragt, da bei Einschrauben des Metalldübels die Beschichtung des ersten Bauteils abplatzen kann oder aber nicht richtig festgezogene Muttern im Laufe der Zeit zu einer Lockerung der Bauteile zueinander führen, was den Qualitätseindruck der so zusammengebauten Möbel mindert.

Aus der DE 20 2009 008 825 U1 ist beispielsweise ein Stecksystem bekannt, mit dem es möglich ist, zwei Elemente mittels eines Stecksystems miteinander zu koppeln. Hierzu sind Koppelmittel, die sich in einer Randzone befinden und gegenüber einem Element überstehen, in das zweite Element einsteckbar und verriegeln innerhalb dieses. Weiterhin ist aus der WO 2011/151 758 A2 ein Stecksystem zur Verbindung zweier Bauelemente mittels Federzungen bekannt.

Ferner sind aus der DE 10 2005 028 072 A1, der US 2006/0101769 A1 sowie der EP 0 976 889 A1 Nut- und Federstecksysteme zur Verbindung von Fußbodenpaneelen bekannt.

Aufgabe der vorliegenden Erfindung ist es daher, ausgehend vom Stand der Technik, eine Verbindung, insbesondere eine Eckverbindung für zwei Bauelemente bereitzustellen, die einfach komplettierbar, robust und langlebig ist und insbesondere unter optischen Gesichtspunkten eine kostengünstige Herstellung des aus den Bauelementen zusammengesetzten Bauteils ermöglicht.

Die zuvor genannte Aufgabe wird erfindungsgemäß mit einer Verbindung zweier Bauelemente gemäß dem Merkmal im Patentanspruch 1 gelöst.

Die Aufgabe wird weiterhin durch die Verwendung einer erfindungsgemäßen Verbindung gemäß den Merkmalen von Patentanspruch 15 gelöst.

Die zuvor genannte Aufgabe wird weiterhin bei einem Bauelement in Form einer Fußleiste gemäß den Merkmalen im Patentanspruch 16 und bei einer Schublade gemäß den Merkmalen im Patentanspruch 17 gelöst.

Vorteilhafte Ausführungsvarianten der vorliegenden Erfindung sind Bestandteil der abhängigen Patentansprüche.

Bei der erfindungsgemäßen Verbindung zweier Bauelemente, wobei die Bauelemente mit einem Nut- und Federstecksystem ineinandersteckbar sind und formschlüssig zueinander fixierbar sind, weist ein erstes Bauelement an einer Innenseite eine Nut auf, in die eine gegenüber einer Stirnseite des zweiten Bauelements überstehende Feder einsteckbar ist, wobei an einer Außenseite des zweiten Bauelements eine Rastfeder ausgebildet ist, die ebenfalls über die Stirnseite des zweiten Bauelementes übersteht und in eine Rastnut.an der Kopfseite des ersten Bauelementes eingreift.

Die erfindungsgemäße Verbindung ist als Eckverbindung der zwei Bauelemente ausgebildet. Bei den Bauelementen handelt es sich bevorzugt um zwei flächige Bauelemente, beispielsweise eines Möbels oder aber einer Schublade oder auch einer Fußleiste. Durch die erfindungsgemäße Anordnung ergibt sich insbesondere der Vorteil, dass die Bauelemente ohne Zuhilfenahme weiteren Werkzeuges ineinandersteckbar sind und dabei eine sichere und feste formschlüssige Verbindung immer gleicher Qualität ausgebildet ist. Durch das Nut- und Federstecksystem wird eine robuste Zugbelastung auch bei langwieriger und intensiver Nutzung des Bauteils, welches eine erfindungsgemäße Verbindung, insbesondere Eckverbindung aufweist, sichergestellt. Durch die Rastfeder und die Rastnut ergibt sich eine formschlüssige Kopplung, so dass die beiden Bauelemente sicher formschlüssig zueinander lagefixiert sind.

Weiterhin vorteilhaft kommt die Stirnseite des zweiten Bauelements mit einer Innenanlagefläche des ersten Bauelementes formschlüssig zur Anlage. Hierdurch wird sichergestellt, dass zum einen durch die zwischen Stirnseite und Innenanlagefläche sowie durch Nut und Feder ausgebildeten Formschlüsse eine lagefixierte Anordnung beider Bauelemente zueinander erfolgt. Im Falle einer Eckverbindung von im Wesentlichen 90° erfolgt somit durch das Nut- und Federstecksystem eine Lagefixierung, die sich im Wesentlichen in Richtung der Längserstreckung des ersten Bauelementes orientiert sowie durch die Rastnut und die Rastfeder in Verbindung mit der Anlagefläche zwischen Stirnseite und Innenanlagefläche ein hierzu orthogonal liegender Formschluss, der sich im Wesentlichen in die Längserstreckung des zweiten Bauelementes orientiert. Im Rahmen der Erfindung ist bevorzugt die Anlagefläche zwischen Stirnseite und Innenanlagefläche derart ausgebildet, dass bei der Komplettierung des Bauteils zum Einrasten der Rastfeder mit der Rastnut ein kurzzeitig erhöhter Druck ausgeübt wird und sodann Rastfeder und Rastnut einrasten. Hierdurch wird eine spielfreie Koppelung im Bereich der Anlagefläche realisiert. Im Rahmen der Erfindung ist es unter Umständen möglich, das die Rastfeder nach Koppelung beider Bauelemente unter einer geringfügigen Zugspannung steht. Insbesondere in Verbindung mit einer Übermaßpassung der Nut und Feder ergibt sich somit selbst bei langjähriger intensiver Nutzung eine spielfreie Koppelung der zwei Bauelemente über die erfindungsgemäße Verbindung. Mithin leiert oder schlägt die Verbindung nicht aus.

Weiterhin besonders bevorzugt verbleibt bei eingesteckter Feder in die Nut im Nutgrund ein Hohlraum, insbesondere ergibt sich ein Abstand des Nutgrundes von der Spitze der Feder zwischen 0,1 mm und 5 mm, insbesondere ein Abstand zwischen 0,5 mm und 3 mm und ganz besonders bevorzugt ein Abstand zwischen 1 mm und 2,5 mm. Hierdurch ist es zum einen möglich, Produktionstoleranzen der Feder während des Herstellungsprozesses der Stirnseite des zweiten Bauelements auszugleichen. Zum zweiten ist es während des oben beschriebenen Einsteckvorgangs zum Einrasten der Rastfeder in die Rastnut durch den Hohlraum zwischen Nut und Feder möglich, das zweite Bauelement geringfügig gegen das erste Bauelement zu drücken, so dass die Rastung erfolgt.

Weiterhin besonders bevorzugt bilden die Feder und die Nut eine formschlüssige Verbindung aus, insbesondere eine Übergangspassung oder eine Übermaßpassung, wobei die formschlüssige Verbindung insbesondere orthogonal zur Nutrichtung ausgebildet ist. Die Nut erstreckt sich im Wesentlichen von einer Oberfläche, ganz besonders bevorzugt von einer Innenseite des ersten Bauelementes in Richtung zur zweiten Oberfläche bzw. Außenseite des ersten Bauelements. Im Falle einer Eckverbindung erstreckt sich die Nut insbesondere von der Innenseite in einem orthogonalen Winkel zum ersten Bauelement. Insofern ist durch die mindestens Übergangspassung, insbesondere jedoch durch die Übermaßpassung zwischen Nut und Feder sichergestellt, dass die zwei Bauelemente über die Verbindung, insbesondere die Eckverbindung, spielfrei, auch unter Berücksichtigung von Produktionstoleranzen miteinander gekoppelt sind. Ferner ergibt sich insbesondere bei Ausbildung der Eckverbindung an einer Schublade eine hohe Belastung aufgrund intensiver langjähriger Benutzung durch Aufziehen und Zuschieben der Schublade, wobei im Falle einer Übermaßpassung ein spielfreies Koppeln der zwei Bauelemente ermöglicht wird, dass auch nicht bei intensiver Nutzung ausleiert.

Im Rahmen der Erfindung ist jedoch die Verbindung nicht auf eine reine Eckverbindung mit einem 90° Winkel beschränkt, sie kann auch in hiervon abweichenden Gradzahlen ausgebildet sein. So ist es im Rahmen der Erfindung insbesondere möglich, die Verbindung der zwei Bauelemente unter Ausbildung einer Ecke in einem Winkel zwischen 0° und 180° zueinander zu fixieren. Insbesondere in einem Winkel zwischen 10° und 170°, bevorzugt zwischen 20° und 160°, besonders bevorzugt zwischen 30° und 150° und ganz besonders bevorzugt zwischen 70° und 100° zu fixieren. Vorzugsweise wird jedoch eine Eckverbindung von im Wesentlichen 90° mit der erfindungsgemäßen Verbindung ausgebildet. Im Rahmen der Erfindung ist es somit möglich, beispielsweise von Schubladen, die an einem Eckregal eines Möbelstücks montiert sind und eine Frontfläche haben, die in einem nicht rechteckigen Winkel zu dem Rest des Möbelstückes verlaufen, ebenfalls mit Hilfe der erfindungsgemäßen Verbindung eine einfache Konstruktion der Schublade zu realisieren. Ferner ist es möglich, im Falle der Anwendung der Verbindung für eine Fußleiste eine obere Abschlussleiste in einem Winkel zu der Basissockelleiste anzuordnen.

Im Rahmen der Erfindung erstreckt sich weiterhin die Rastfeder an der Außenseite des zweiten Bauelementes bis in die Ecke der Eckverbindung.

Die Außenseite des zweiten Bauelementes ist im Eckbereich von einer Rückseite der Rastfeder ausgebildet. Hierdurch ergibt sich ein weiterer erfindungswesentlicher Vorteil, wodurch es im Falle von beschichteten, beispielsweise mit einem Laminat oder aber einem Furnier beschichteten Bauelementen möglich ist, lediglich eine Außenseite zu beschichten und gegebenenfalls die sich ergebende Kante der Außenseite zu brechen oder aber zu versiegeln. Durch das Ineinanderstecken wird somit in der Ecke die eine Außenseite durch die Rastfeder, die andere Außenseite durch die Rastnut begrenzt. Es ergibt sich an der Spitze der Rastfeder somit die Ecke der Eckverbindung und damit die sichtbare Ecke des aus den mindestens zwei Bauelementen zusammengesetzten Bauteils. Eine Ummantelung oder aber eine um eine Ecke oder Spitze nur eines Bauelements umgelegte Beschichtung entfällt somit im Rahmen der Erfindung vollends, ohne den optischen Qualitätseindruck zu mindern.

Hierzu ist weiterhin an der Kopfseite des ersten Bauelements bevorzugt die Rastnut unmittelbar an die Außenseite des ersten Bauelementes angrenzend ausgebildet. Hiermit wird die außenliegende Kante, insbesondere eine außenliegende Sichtkante des aus den zwei Bauelementen zusammengesetzten Bauteils durch zum einen die Spitze der Rastfeder, zum anderen die Spitze der Rastnut ausgebildet. Bevorzugt kann hier beispielsweise zwischen Rastfeder und Rastnut ein Dichtelement angeordnet sein, das verhindert, dass Schmutz oder aber Flüssigkeiten in den Koppelungsbereich hineindringen.

Weiterhin bevorzugt ist die Kopfseite des ersten Bauelements von der Rastnut aus zu der Innenseite des ersten Bauelementes schräg abnehmend ausgebildet. Hierdurch entsteht ein Hohlraum zwischen der Kopfseite und der Rastfeder, so dass ein sicheres formschlüssiges Eingreifen der Rastfeder in die Rastnut gewährleistet ist.

Ferner weist ein Federsteg der Rastfeder einen konstanten Querschnitt auf oder aber einen zunehmenden oder abnehmenden Querschnitt. Hierbei ist es je nach Auslegung und Dimensionierung der erfindungsgemäßen Verbindung möglich, die Rastfeder, insbesondere den Federsteg der Rastfeder an die zu erwartenden Belastungen und die zu erreichenden Festigkeiten der Verbindung anzupassen. Zur Sicherstellung eines Einrastens der Rastfeder in die Rastnut und eines auch jahrelangen festen Sitzes der Rastfeder in der Rastnut ist es ferner vorteilhaft, wenn die an den zweiten Bauelementen ausgebildete Rastfeder in Richtung zu der Feder, also in Richtung zu einer Innenseite des zweiten Bauelementes gekrümmt ausgebildet ist und/oder wenn der Federsteg der Rastfeder auf einer Innenseite des Federsteges selbst eine Zugspannung aufweist. Hierdurch wird sichergestellt, dass die Rastfeder immer einen inneren Spannungszustand aufweist, der in Richtung zu dem ersten Bauelement hin orientiert ist. Es wird dadurch sichergestellt, dass die Rastfeder immer sicher in der Rastnut eingerastet ist und nicht von alleine aus dieser heraus bewegbar ist.

Ferner ist die Rastfeder derart in die Rastnut einrastbar, so dass eine formschlüssige Hinterschneidung in Einsteckrichtung der Nut und Feder ausgebildet ist. Mithin ist die Einsteckrichtung des Nut- und Federstecksystems an einem Auseinandergleiten durch die formschlüssige Hinterschneidung der Rastfeder und der Rastnut gehindert. Die Rastfeder und die Rastnut können dabei in Form eines Sägezahnprofils ausgebildet sein oder aber auch in Form eines Widerhakens. Die Rastfeder und Rastnut können ferner derart ausgebildet sein, dass sie bei Überwinden einer hinreichend großen Kraft in Richtung des Feder- und Nutstecksystems lösbar sind. So kann beispielsweise eine einmal zusammengesteckte Verbindung bei Überwindung einer hinreichend hohen Kraft durch Auseinanderziehen wieder gelöst werden.

Im Rahmen der Erfindung ist es ferner möglich, die Außenseiten beider Bauelemente zu beschichten, wobei die Beschichtung durch die erfindungsgemäße Verbindung ausschließlich an der Außenseite oder aber an einer Innenseite des Bauteils ausgebildet sein muss, nicht jedoch die Stirn- bzw. Kopfseite des jeweiligen Bauelementes umgreifen muss. Beispielsweise können die Außen- oder aber Innenseiten der Bauelemente, mithin die nach außen sichtbaren Oberflächen mit einer Dekoroberfläche, beispielsweise einer Kunststofffläche oder aber auch mit einem Furnier beschichtet sein. Alternativ ist es auch möglich, im Rahmen der Erfindung, die Außenseiten oder aber auch die Innenseiten beider Bauteile zu folieren. Hierzu wird eine Folie auf die zuvor beschriebenen Oberflächen aufgeklebt oder in sonstiger Weise mit den Bauelementen gekoppelt. Im Rahmen der Erfindung ist es ferner möglich, die Oberflächen der Bauelemente zu lackieren. Die Bauelemente selbst sind dann wiederum im Rahmen der Erfindung insbesondere aus Verbundwerkstoffen oder aber holzartigen Werkstoffen hergestellt. Beispielsweise sind die Bauelemente aus MDF oder HDF oder Holz oder aber aus Faserverbundwerkstoff hergestellt.

Zur weiteren Festigkeitssteigerung der erfindungsgemäßen Verbindung ist es möglich, zwischen den Bauelementen, insbesondere innerhalb der Verbindung mindestens einen zusätzlichen Verbindungsstift und/oder einen Flachdübel einzugliedern. Ein Verbindungsstift ist beispielsweise ein Holzdübel, der insbesondere als zylindrischer Holzdübel ausgebildet ist. Im Rahmen der Erfindung sind die Verbindungsstifte jedoch nicht auf den Werkstoff Holz beschränkt, sondern können ebenfalls aus Kunststoff oder andersartigen Werkstoffen ausgebildet sein.

Im Rahmen der Erfindung ist die erfindungsgemäße Verbindung insbesondere auch auf Längskanten eines Bauteils anzuwenden, dass aus zwei Bauelementen besteht, die sich auch über mehrere Zentimeter, insbesondere auch über mehrere Meter erstrecken können. Beispielsweise ist die erfindungsgemäße Verbindung im Falle einer Fußleiste auf ein zwei, drei oder sogar vier Meter langes Bauteil anwendbar. Hierbei ist es dann im Rahmen der Erfindung möglich, in Längsrichtung des Bauteils mehrere Verbindungsstifte in gleichmäßigen oder aber ungleichmäßigen Abständen anzuordnen. Insbesondere wird der Verbindungsstift zwischen der Rastfeder und der Feder an dem zweiten Bauelement und zwischen der Nut und der Rastnut an dem ersten Bauelement angeordnet.

Im Rahmen der Erfindung sind insbesondere die Feder und bevorzugt die Rastfeder an dem zweiten Bauelement einstückig ausgebildet. Das heißt im Rahmen der Erfindung sind die Feder und/oder die Rastfeder aus dem gleichen Element einteilig und einstückig an dem zweiten Bauelement ausgebildet. Beispielsweise ist es im Rahmen der Erfindung möglich, das zweite Bauelement durch frästechnische Bearbeitung der Stirnseite mit Feder und Rastfeder auszubilden. Im Rahmen der Erfindung ist es jedoch auch möglich, dass die Feder oder aber auch die Rastfeder aus einem von dem zweiten Bauelement verschiedenen Werkstoff ausgebildet sind und mit dem zweiten Bauelement gekoppelt sind. Beispielsweise ist es möglich, die Feder oder aber auch die Rastfeder aus einem gegenüber dem zweiten Bauelement härteren Werkstoff auszubilden, beispielsweise aus einem metallischen Werkstoff. Hierdurch ergibt sich dann eine höhere Dauerhaltbarkeit der so hergestellten Verbindung.

Im Rahmen der Erfindung ist die Verbindung nicht auf die zuvor beschriebene Ausführungsvariante mit zweitem und erstem Bauelement beschränkt. Im Rahmen der Erfindung wird insbesondere ein Bauteil, beispielsweise eine Schublade, ein Möbel, eine Fußleiste oder ein ähnliches Bauteil mit der erfindungsgemäßen Verbindung, insbesondere mit der Eckverbindung, ganz besonders bevorzugt mit der Steckverbindung derart gekoppelt, dass auch das erste Bauelement eine Feder und eine Rastfeder aufweisen kann und die Nut und die Rastnut an dem zweiten Bauelement ausgebildet ist. Besonders bevorzugt sind viereckige Bauteile mit den Bauelementen herstellbar, wobei dann mindestens zwei, insbesondere vier erfindungsgemäße Verbindungen an den vier Ecken ausgebildet sind. Das so hergestellte Bauteil zeichnet sich durch eine besonders kurze und leichte Montage aus, da die vier Bauelemente einfach ineinander gesteckt werden und gleichzeitig eine langlebige und hochfeste Verbindung aufweisen.

Insbesondere wird die erfindungsgemäße Verbindung dazu verwendet, zwei Bauteile eines Möbels, eines Türrahmens, eines Türfutters, eines Bilderrahmens, einer Treppe, einer Fußbodenleiste, eines Fußbodenbelages, einer Paneelfläche oder aber auch einer Schublade miteinander zu koppeln.

Weiterhin bevorzugt wird mit der erfindungsgemäßen Verbindung eine Fußleiste zur Befestigung über einem Fußbodenbelag an einer Wand hergestellt, wobei die Fußleiste zweiteilig aus den zuvor beschriebenen zwei Bauelementen ausgebildet ist. Hierdurch ist es möglich, beispielsweise das zweite Bauelement als obere Abschlussleiste an der Wand und das erste Bauelement als im Wesentlichen senkrecht auf dem Fußbodenbelag stehende Sockelleiste zu verwenden. Die zwischen den zwei Bauelementen ausgebildete Ecke ist dann die Sichtkante, wobei der erfindungsgemäße Aufbau der Verbindung durch ausschließliche Beschichtung der Außenflächen es ermöglicht, dass die Bauelemente nicht über die Ecke hinaus beschichtet werden müssen. Hierdurch sinken die Produktionskosten, da eine Beschichtung, Folierung oder sonstige Oberflächenbehandlung ausschließlich auf einem flächigen Bereich erfolgen und nicht über eine Kante hinweg aufgetragen oder aber mit dem Bauelement gekoppelt werden müssen.

Weiterhin besonders bevorzugt wird die erfindungsgemäße Verbindung dazu genutzt, eine Schublade mit vier Außenwänden und einer Bodenplatte in besonders einfacher Weise zu montieren. Hierzu sind die vier Außenwände jeweils mit einer Verbindung mit mindestens einem der zuvor beschriebenen Eigenschaften miteinander gekoppelt. Eine vordere Abschlussaußenwand kann dabei dann die Frontblende der Schublade sein oder aber es wird noch eine zusätzliche Frontblende auf die vordere Außenwand aufgesetzt. Die erfindungsgemäße Schublade ist dann in kürzester Zeit mit hoher Maßhaltigkeit montierbar und weist eine besonders gute Dauerfestigkeit auch bei jahrelanger intensiver Nutzung auf.

Die zuvor genannten Merkmale mit den damit einhergehenden Eigenschaften und Vorteilen sind im Rahmen der Erfindung beliebig untereinander kombinierbar.

Weitere Vorteile, Merkmale, Eigenschaften und Aspekte der vorliegenden Erfindung sind Bestandteil der folgenden Beschreibung. Bevorzugte Ausführungsvarianten sind in den schematischen Figuren dargestellt. Diese dienen dem einfachen Verständnis der Erfindung. Es zeigen:
- Figur 1: eine erfindungsgemäße Verbindung zwischen einem ersten Bauelement und einem zweiten Bauelement in einer Querschnittsansicht;
- Figur 2a und 2b: eine erfindungsgemäße Verbindung mit bevorzugter Bemaßung;
- Figur 3: eine erfindungsgemäße Schublade in einer Draufsicht in Querschnittsansicht;
- Figur 4: die Schublade aus Figur 3 mit zusätzlichen Verstärkungselementen;
- Figur 5: eine perspektivische Seitenansicht zweier Bauelemente und
- Figur 6a bis c: eine erfindungsgemäße Fußleiste in Querschnittsansicht.

In den Figuren werden für gleiche oder ähnliche Bauteile dieselben Bezugszeichen verwendet, auch wenn eine wiederholte Beschreibung aus Vereinfachungsgründen entfällt.

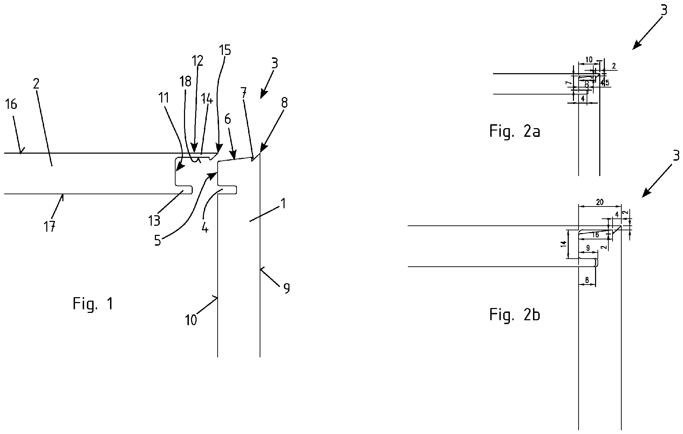

Figur 1 zeigt ein erstes Bauelement 1 und ein zweites Bauelement 2, die über eine erfindungsgemäße Verbindung 3 miteinander koppelbar sind. Hierzu ist an dem ersten Bauelement 1 eine Nut 4, eine Innenanlagefläche 5, eine Kopfseite 6 sowie eine Rastnut 7 ausgebildet. Die Rastnut 7 ist dabei an der Kopfseite 6 des ersten Bauelementes 1 derart angeordnet, dass sie im Bereich einer Ecke 8 den Abschluss des ersten Bauelements 1 derart ausbildet, dass die Ecke 8 danach direkt in eine Außenseite 9 des ersten Bauelementes 1 übergeht. Ferner besitzt das erste Bauelement 1 eine Innenseite 10. Die Kopfseite 6 des ersten Bauelementes 1 ist von der Rastnut 7 zu der Innenanlagefläche 5 hin orientiert abnehmend ausgebildet.

Das zweite Bauelement 2 weist eine Stirnseite 11 auf, wobei gegenüber der Stirnseite 11 eine Rastfeder 12 sowie ein Feder 13 überstehen. Die Feder 13 greift dabei, wie in Figur 2a und 2b gezeigt, in die Nut 4 des ersten Bauelementes 1 ein und die Rastfeder 12 verrastet mit der Rastnut 7 des ersten Bauelementes 1. Die Rastfeder 12 selbst weist einen Federsteg 14 auf, der in der hier dargestellten Ausführungsvariante einen konstanten Querschnitt besitzt. Die Rastfeder 12 selber bildet an der herzustellenden Verbindung die Ecke 15, wobei eine Außenseite 16 des zweiten Bauelementes 2 bis in die Ecke 15 der Rastfeder 12 verlaufend ausgebildet ist. Ferner besitzt das zweite Bauelement 2 eine Innenseite 17, die bis in die Feder 13 hinein ausgebildet sein kann. Die Rastfeder 12 selber besitzt ebenfalls eine Innenseite 18, die hier nicht näher dargestellt unter Vorspannung ausgebildet ist, so dass die Rastfeder 12 in Richtung der Rastnut 7 orientiert gedrückt ist.

Figur 2a und 2b zeigen zwei verschiedene Ausführungsvarianten der ineinander gesteckten Verbindung 3, wobei die gezeigte Verbindung 3 jeweils bemaßt ist und die Bemaßung in Millimeterangaben vorgenommen ist. Im Rahmen der Erfindung ist die Verbindung 3 nicht auf die in Figur 2a und 2b gezeigten Bemaßungen beschränkt.

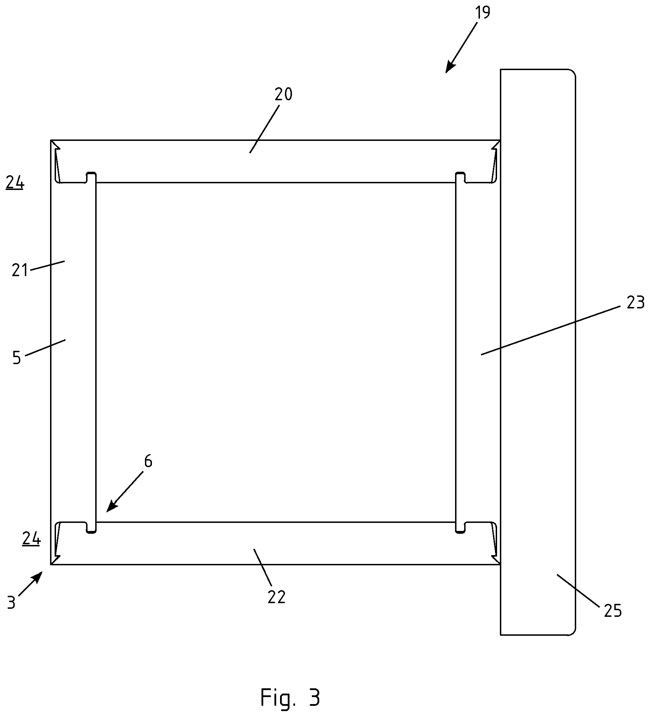

Figur 3 zeigt eine erfindungsgemäß hergestellte Schublade 19, wobei die Schublade 19 vier Außenwände 20, 21, 22, 23 aufweist, wobei die Außenwand 20 und 22 jeweils korrespondierend zu Figur 1 als erstes Bauelement und die Außenwände 21 und 23 als zweites Bauelement ausgebildet sind. An jedem Ende 24 einer jeden Außenwand 20, 21, 22, 23, wobei hier die Enden 24 exemplarisch für die Außenwand 21 eingezeichnet sind, ist eine Außenwand derart beschaffen, dass eine erfindungsgemäße Verbindung 3 herstellbar ist. Optional ist im Rahmen der Erfindung dann eine Frontblende 25 vor der Schublade 19 anordnenbar,

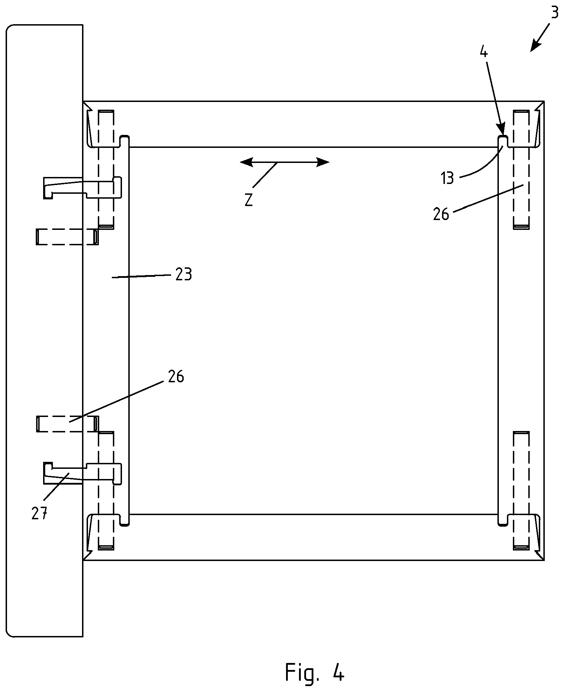

Figur 4 zeigt einen analogen Aufbau zu Figur 3, wobei jedoch in der Verbindung 3 zusätzlich ein Positionierstift 26 eingebracht, der in Zugrichtung Z eine zusätzliche Steifigkeit Höhenpositionierung der vorliegenden Verbindung 3 herstellt. Somit wird die Zugkraft nicht ausschließlich über die in der Nut 4 angeordnete Feder 13 übertragen, sondern auch über den Verbindungsstift 26. Ferner ist die Frontblende 25 mit einem Klicksystem 27 und zusätzlichen Verbindungsstiften 26 an der vorderen Außenwand 23 befestigt.

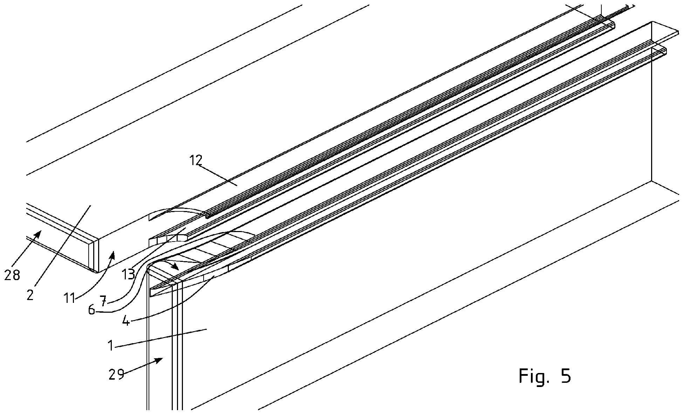

Figur 5 zeigt eine weitere Ausführungsvariante der vorliegenden Erfindung in perspektivischer Ansicht. Hierbei ist analog zu Figur 1 das zweite Bauelement 2 mit einer Rastfeder 12 und einer Feder 13 versehen, die gegenüber der Stirnseite 11 des zweiten Bauelements 2 überstehend ausgebildet sind. Die Feder 13 greift dabei in eine Nut 4 des ersten Bauelements 1 und die Rastfeder 12 greift in die Rastnut 7 auf der Kopfseite 6 des ersten Bauelements 1. Hier dargestellt ist, dass an dem zweiten Bauelement 2 die Rastfeder 12 und die Feder 13 nicht bis zu einer Abschlussseite 28 des zweiten Bauelementes 2 ausgebildet sind, sondern bereits vorher aufhören. Der Übergang kann dabei, wie hier dargestellt, mit einem Radius oder aber auch unter einem Winkel, insbesondere auch rechtwinklig ausgebildet sein. Analoge Ausführungen gelten für das erste Bauelement 1, wobei hier ebenfalls die Nut 4 und die Rastnut 7 nicht bis zu der Abschlussseite 29 des ersten Bauelementes 1 ausgebildet sind, sondern bereits vor dieser aufhören. Auch hier kann der Übergang, wie dargestellt, in einem Radius erfolgen oder aber auch linear unter Verlauf eines Winkels, insbesondere rechtwinklig.

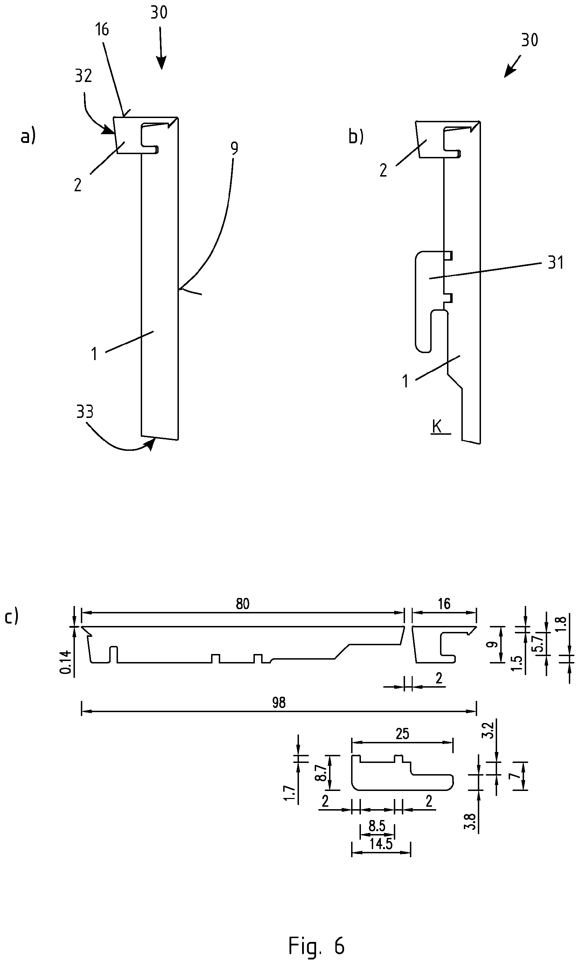

In Figur 6a und b ist eine erfindungsgemäß hergestellte Fußleiste 30 dargestellt, wobei die Fußleiste 30 in Figur 6a als einfache Kopplung von erstem und zweitem Bauelement 1, 2 dargestellt ist und in Figur 6b als Fußleiste 30 mit einem zusätzlichen Befestigungselement an einer nicht näher dargestellten Wand, wobei im unteren Bereich ein Kabelschacht K zum Führen nicht dargestellter Kabel verbleibt. Eine Rückseite 32 des zweiten Bauelementes 2 der Fußleiste 30 sowie eine Unterseite 33 sind jeweils schräg unter einem Winkel ausgebildet, so dass die jeweils dargestellten Außenseiten 9, 16 nahezu vollständig an dem nicht näher dargestellten Fußboden im Falle des ersten Bauelementes 1 und nahezu vollständig an der nicht näher dargestellten Wand im Falle des zweiten Bauelementes 2 anliegen.

In Figur 6c dargestellt sind die einzelnen Elemente der erfindungsgemäßen Fußleiste 30 mit einer bevorzugten Bemaßung, wobei die Fußleiste 30 nicht auf die hier beschriebenen Maße beschränkt ist. Das Befestigungselement 31 sowie das erste Element 1 sind im Rahmen der Erfindung über ein nicht näher dargestelltes System koppelbar, wobei dieses ebenfalls ein Klicksystem sein kann oder aber auch ein Klebesystem oder Klemmsystem.

### Bezugszeichen:

- 1 -: erstes Bauelement
- 2 -: zweites Bauelement
- 3 -: Verbindung
- 4 -: Nut
- 5 -: Innenanlagefläche
- 6 -: Kopfseite
- 7 -: Rastnut
- 8 -: Ecke zu 1
- 9 -: Außenseite zu 1
- 10 -: Innenseite zu 1
- 11 -: Stirnseite zu 2
- 12 -: Rastfeder
- 13 -: Feder
- 14 -: Federsteg zu 12
- 15 -: Ecke zu 2
- 16 -: Außenseite zu 2
- 17 -: Innenseite zu 2
- 18 -: Innenseite zu 12
- 19 -: Schublade
- 20 -: Außenwand zu 19
- 21 -: Außenwand zu 19
- 22 -: Außenwand zu 19
- 23 -: Außenwand zu 19
- 24 -: Ende zu 20, 21, 22, 23
- 25 -: Frontblende
- 26 -: Positionierstift
- 27 -: Klicksystem
- 28 -: Abschlussseite zu 2
- 29 -: Abschlussseite zu 1
- 30 -: Fußleiste
- 31 -: Befestigungselement
- 32 -: Rückseite zu 2
- 33 -: Unterseite zu 1

- Z -: Zugrichtung
- K -: Kabelschacht

## Patentansprüche

1. Verbindung (3) bestehend aus zwei Bauelementen (1,2), wobei die Verbindung die zwei Bauelemente (1,2) unter Ausbildung einer Ecke (15) in einem Winkel zwischen 0 und 180 Grad zueinander fixiert, wobei die Bauelemente (1, 2) mit einem Nut- und Feder Stecksystem ineinander steckbar sind und formschlüssig zueinander fixierbar sind, wobei ein erstes Bauelement (1) an einer Innenseite (17) eine Nut (4) aufweist, in die eine gegenüber einer Stirnseite (11) des zweiten Bauelementes (2) überstehende Feder (13) steckbar ist, wobei an einer Außenseite (16) des zweiten Bauelementes (2) eine Rastfeder (12) ausgebildet ist, die ebenfalls über die Stirnseite (11) übersteht und in eine Rastnut (7) an der Kopfseite (6) des ersten Bauelementes (1) eingreift, **dadurch gekennzeichnet, dass** die Rastfeder (12) sich an der Außenseite (16) des zweiten Bauelements (2) bis in die Ecke (15) erstreckt, wobei die Außenseite (16) im Eckbereich von einer Rückseite der Rastfeder (12) ausgebildet ist.

2. Verbindung nach Anspruch 1, **dadurch gekennzeichnet, dass** die Stirnseite (11) mit einer Innenanlagefläche (5) des ersten Bauelementes (1) formschlüssig zur Anlage kommend ausgebildet ist.

3. Verbindung nach Anspruch 1 oder 2, **dadurch gekennzeichnet, dass** bei eingesteckter Feder (13) in die Nut (4) im Nutgrund ein Hohlraum verbleibt, insbesondere ein Abstand des Nutgrundes von der Spitze der Feder zwischen 0,1 und 5mm, insbesondere zwischen 0,5 und 3mm und ganz besonders bevorzugt zwischen 1 und 2,5mm.

4. Verbindung nach einem der vorangehenden Ansprüche, **dadurch gekennzeichnet, dass** die Feder (13) und die Nut (4) eine formschlüssige Verbindung ausbilden, insbesondere eine Übergangspassung oder eine Übermaßpassung, wobei die formschlüssige Verbindung insbesondere orthogonal zur Nutrichtung ausgebildet ist.

5. Verbindung nach einem der vorangehenden Ansprüche, **dadurch gekennzeichnet, dass** der Winkel zwischen 10 und 170 Grad, bevorzugt zwischen 20 und 160 Grad, besonders bevorzugt zwischen 30 und 150 Grad und ganz besonders bevorzugt zwischen 70 und 100 Grad, vorzugsweise 90 Grad beträgt.

6. Verbindung nach einem der vorangehenden Ansprüche, **dadurch gekennzeichnet, dass** an der Kopfseite (6) des ersten Bauelementes (1) die Rastnut (7) unmittelbar an die Außenseite (9) des ersten Bauelements (1) angrenzend ausgebildet ist.

7. Verbindung nach einem der vorangehenden Ansprüche, **dadurch gekennzeichnet, dass** die Kopfseite (6) des ersten Bauelementes (1) von der Rastnut (7) zu der Innenseite (10) schräg abnehmend ausgebildet ist.

8. Verbindung nach einem der vorangehenden Ansprüche, **dadurch gekennzeichnet, dass** ein Federsteg (14) der Rastfeder (12) einen konstanten Querschnitt aufweist oder einen zunehmenden oder abnehmenden Querschnitt aufweist und/oder dass die Rastfeder (12) zu der Feder (13) hin gekrümmt ausgebildet ist und/oder dass der Federsteg (14) auf einer Innenseite eine Zugspannung aufweist.

9. Verbindung nach einem der vorangehenden Ansprüche, **dadurch gekennzeichnet, dass** die Rastnut (7) und die Rastfeder (12) derart einrastbar sind, so dass ein formschlüssige Hinterschneidung in Einsteckrichtung der Nut (4) und Feder (13) ausgebildet ist.

10. Verbindung nach einem der vorangehenden Ansprüche, **dadurch gekennzeichnet, dass** bei eingerasteter Rastfeder (12) und Rastnut (7) ein Hohlraum zwischen der Kopfseite (6) des ersten Bauelementes (1) und einer Vorderseite der Rastfeder (12) verbleibt, insbesondere ist der Hohlraum zu der Stirnseite (11) des zweiten Bauelementes (2) hin zunehmend ausgebildet.

11. Verbindung nach einem der vorangehenden Ansprüche, **dadurch gekennzeichnet, dass** die Außenseiten (9, 16) beider Bauelemente (1,2) beschichtet sind, insbesondere mit einer Dekoroberfläche oder mit einem Furnier oder dass die Außenseiten (9, 16) foliert sind und/oder dass die Innenseiten (10) beider Bauelemente (1, 2) beschichtet oder foliert sind.

12. Verbindung nach einem der vorangehenden Ansprüche, **dadurch gekennzeichnet, dass** zwischen erstem Bauelement (1) und zweiten Bauelement (2) ein Verbindungsstift (26) und/oder ein Flachdübel eingegliedert ist.

13. Verbindung nach einem der vorangehenden Ansprüche, **dadurch gekennzeichnet, dass** die Bauelemente (1, 2) aus MDF oder HDF oder Holz oder Faserverbundwerkstoff hergestellt sind.

14. Verbindung nach einem der vorangehenden Ansprüche, **dadurch gekennzeichnet, dass** die Feder (13) einstückig an dem zweiten Bauelement (2) ausgebildet ist oder dass die Feder (13) aus einem von dem zweiten Bauelement (2) verschiedenen Werkstoff ausgebildet ist und mit dem zweiten Bauelement (2) gekoppelt ist.

15. Verwendung einer Verbindung (3) nach mindestens Anspruch 1 zum Koppeln zweier Bauteile eines Möbels, eines Türrahmens, eines Bilderrahmens, einer Treppe, eines Fußbodenbelages oder einer Paneelfläche.

16. Fußleiste (30) zur Befestigung über einem Fußbodenbelag an einer Wand, wobei die Fußleiste (30) zweiteilig ausgebildet ist, **dadurch gekennzeichnet, dass** die zwei Bauelemente (1, 2) der Fußleiste (30) mit einer Verbindung (3) nach mindestens Anspruch 1 gekoppelt sind.

17. Schublade (19) zur Anordnung in einem Möbel, wobei die Schublade (19) vier Außenwände (20,21,22,23) und eine Bodenplatte aufweist, **dadurch gekennzeichnet, dass** die Außenwände (20,21,22,23) mit einer Verbindung (3) nach mindestens Anspruch 1 gekoppelt sind.

## Claims

1. Connection (3) consisting of two components (1, 2), wherein the connection fixes the two components (1, 2) to each other forming a corner (15) at an angle between 0 and 180 degrees, wherein the components (1, 2) are able to be plugged into each other using a tongue and groove plug system and are able to be positively fixed to each other, wherein a first component (1) has a groove (4) on an inner side (17) into which a tongue (13) which protrudes compared to a front side (11) of the second component (2) is able to be plugged, wherein a latching tongue (12) is formed on an outer side (16) of the second component (2), said latching tongue likewise protruding over the front side (11) and engaging with a latching groove (7) on the head side (6) of the first component (1), **characterised in that** the latching tongue (12) extends into the corner (15) on the outer side (16) of the second component (2), wherein the outer side (16) is formed by a rear side of the latching tongue (12) in the corner region.

2. Connection according to Claim 1, **characterised in that** the front side (11) is formed to come into positive contact with an inner contact surface (5) of the first component (1).

3. Connection according to Claim 1 or 2, **characterised in that** when a tongue (13) is plugged into the groove (4), a cavity remains in the groove base, in particular a spacing of the groove base from the tip of the tongue between 0.1 and 5mm, in particular between 0.5 and 3mm and more particularly preferably between 1 and 2.5mm.

4. Connection according to any one of the preceding claims, **characterised in that** the tongue (13) and the groove (4) form a positive connection, in particular a transition fit or an interference fit, wherein the positive connection is formed in particular orthogonally to the groove direction.

5. Connection according to any one of the preceding claims, **characterised in that** the angle is between 10 and 170 degrees, preferably between 20 and 160 degrees, particularly preferably between 30 and 150 degrees and more particularly preferably between 70 and 100 degrees, preferably 90 degrees.

6. Connection according to any one of the preceding claims, **characterised in that** the latching groove (7) is formed on the head side (6) of the first component (1) to be directly adjacent to the outer side (9) of the first component (1).

7. Connection according to any one of the preceding claims, **characterised in that** the head side (6) of the first component (1) is formed to be decreasing in a sloping manner from the latching groove (7) to the inner side (10).

8. Connection according to any one of the preceding claims, **characterised in that** a tongue bar (14) of the latching tongue (12) has a constant cross-section or an increasing or decreasing cross-section; and/or the latching tongue (12) is formed to be curved towards the tongue (13); and/or the tongue bar (14) has a tensile stress on an inner side.

9. Connection according to any one of the preceding claims, **characterised in that** the latching groove (7) and the latching tongue (12) are able to be engaged such that a positive undercut is formed in the plug-in direction of the groove (4) and the tongue (13).

10. Connection according to any one of the preceding claims, **characterised in that** in the case of an engaged latching tongue (12) and latching groove (7), a cavity remains between the head side (6) of the first component (1) and a front side of the latching tongue (12), in particular the cavity is formed to be increasing towards the front side (11) of the second component (2).

11. Connection according to any one of the preceding claims, **characterised in that** the outer side (9, 16) of both components (1, 2) are coated, in particular with a decorative surface or with a veneer; or the outer sides (9, 16) are coated in film; and/or the inner sides (10) of both components (1, 2) are coated or coated in film.

12. Connection according to any one of the preceding claims, **characterised in that** a connection pin (26) and/or a biscuit joiner is introduced between the first component (1) and the second component (2).

13. Connection according to any one of the preceding claims, **characterised in that** the components (1, 2) are produced from MDF or HDF or wood or fibre composite material.

14. Connection according to any one of the preceding claims, **characterised in that** the tongue (13) is formed in one piece on the second component (2); or the tongue (13) is formed from a different material to the second component (2) and is coupled to the second component (2).

15. Use of a connection (3) according to at least Claim 1 to couple two parts of a piece of furniture, a doorframe, a picture frame, a staircase, a floor covering or a panel surface.

16. Skirting board (30) for fastening on a wall over a floor covering, wherein the skirting board (30) is formed in two parts, **characterised in that** the two components (1, 2) of the skirting board (30) are coupled using a connection (3) according to at least Claim 1.

17. Drawer (19) for arrangement in a piece of furniture, wherein the drawer (19) has four outer walls (20, 21, 22, 23) and a base plate, **characterised in that** the outer walls (20, 21, 22, 23) are coupled using a connection (3) according to at least Claim 1.

## Revendications

1. Assemblage (3) constitué de deux éléments de construction (1, 2), l'assemblage fixant les deux éléments de construction (1, 2) l'un par rapport à l'autre en formant un angle (15) compris entre 0 et 180 degrés, les éléments de construction (1, 2) pouvant être emboités l'un dans l'autre avec un système d'emboîtement à rainure et languette et pouvant être fixés l'un par rapport à l'autre par concordance de forme, un premier élément de construction (1) comportant sur un côté intérieur (17) une rainure (4) dans laquelle peut être emboîtée une languette (13) qui dépasse d'un côté frontal (11) du deuxième élément de construction (2), une languette d'encliquetage (12) étant conçue sur un côté extérieur (16) du deuxième élément de construction (2), laquelle languette d'encliquetage dépasse également du côté frontal (11) et pénètre dans une rainure d'encliquetage (7) sur le côté frontal (6) du premier élément de construction (1), **caractérisé en ce que** la languette d'encliquetage (12) s'étend sur le côté extérieur (16) du deuxième élément de construction (2) jusque dans l'angle (15), le côté extérieur (16) étant formé dans la zone d'angle par un côté arrière de la languette d'encliquetage (12).

2. Assemblage selon la revendication 1, **caractérisé en ce que** le côté frontal (11) est conçu de manière à venir s'appuyer par concordance de forme contre une surface d'appui intérieure (5) du premier élément de construction (1).

3. Assemblage selon la revendication 1 ou 2, **caractérisé en ce que**, lorsque la languette (13) est emboîtée dans la rainure (4), il reste dans le fond de rainure un espace creux, notamment avec une distance du fond de la rainure à la pointe de la languette entre 0,1 et 5 mm, notamment entre 0,5 et 3 mm et de préférence entre 1 et 2,5 mm.

4. Assemblage selon l'une des revendications précédentes, **caractérisé en ce que** la languette (13) et la rainure (4) constituent un assemblage par concordance de forme, notamment un ajustement de transition ou un ajustement à surmesure, l'assemblage par concordance de forme étant conçu notamment perpendiculairement à la direction de rainure.

5. Assemblage selon l'une des revendications précédentes, **caractérisé en ce que** l'angle vaut entre 10 et 170 degrés, de manière préférée entre 20 et 160 degrés, de manière particulièrement préférée entre 30 et 150 degrés, de manière tout particulièrement préférée entre 70 et 100 degrés et de préférence 90 degrés.

6. Assemblage selon l'une des revendications précédentes, **caractérisé en ce que**, sur le côté frontal (6) du premier élément de construction (1), la rainure d'encliquetage (7) est conçue directement adjacente au côté extérieur (9) du premier élément de construction (1).

7. Assemblage selon l'une des revendications précédentes, **caractérisé en ce que** le côté frontal (6) du premier élément de construction (1) est conçu de manière à diminuer en biseau de la rainure d'encliquetage (7) au côté intérieur (10).

8. Assemblage selon l'une des revendications précédentes, **caractérisé en ce qu'**une traverse de languette (14) de la languette d'encliquetage (12) a une section transversale constante ou une section transversale croissante ou décroissante et/ou **en ce que** la languette d'encliquetage (12) est conçue recourbée en direction de la languette (13) et/ou **en ce que** la traverse de languette (14) a une contrainte de tension sur son côté intérieur.

9. Assemblage selon l'une des revendications précédentes, **caractérisé en ce que** la rainure d'encliquetage (7) et la languette d'encliquetage (12) peuvent être encliquetées de telle sorte qu'une forme rentrante par concordance de forme est formée dans la direction d'emboîtement de la rainure (4) et de la languette (13).

10. Assemblage selon l'une des revendications précédentes, **caractérisé en ce que**, lorsque la languette d'encliquetage (12) et la rainure d'encliquetage (7) sont encliquetées, il reste un espace creux entre le côté frontal (6) du premier élément de construction (1) et un côté avant de la languette d'encliquetage (12), l'espace creux étant conçu notamment de manière à augmenter en direction du côté frontal (11) du deuxième élément de construction (2).

11. Assemblage selon l'une des revendications précédentes, **caractérisé en ce que** les côtés extérieurs (9, 16) des deux éléments de construction (1, 2) sont revêtus, notamment avec une surface décorative ou avec un placage, ou **en ce que** les côtés extérieurs (9, 16) sont revêtus d'un film et/ou **en ce que** les côtés intérieurs (10) des deux éléments de construction (1, 2) sont revêtus ou couverts d'un film.

12. Assemblage selon l'une des revendications précédentes, **caractérisé en ce qu'**une broche d'assemblage (26) et/ou une cheville plate sont introduites entre le premier élément de construction (1) et le deuxième élément de construction (2).

13. Assemblage selon l'une des revendications précédentes, **caractérisé en ce que** les éléments de construction (1, 2) sont fabriqués en MDF ou HDF ou en bois ou en un matériau composite renforcé par des fibres.

14. Assemblage selon l'une des revendications précédentes, **caractérisé en ce que** la languette (13) est conçue d'un seul tenant sur le deuxième élément de construction (2) ou **en ce que** la languette (13) est conçue en un matériau différent du deuxième élément de construction (2) et est couplée au deuxième élément de construction (2).

15. Utilisation d'un assemblage (3) selon la revendication 1 pour coupler deux pièces de construction d'un meuble, d'un encadrement de porte, d'un cadre de tableau, d'un escalier, d'un revêtement de sol ou d'une surface de panneau de lambris.

16. Plinthe (30) pour la fixation sur un mur au-dessus d'un revêtement de sol, la plinthe (30) étant conçue en deux parties, **caractérisée en ce que** les deux éléments de construction (1, 2) de la plinthe (30) sont couplés avec un assemblage (3) selon au moins la revendication 1.

17. Tiroir (19) destiné à être agencé dans un meuble, le tiroir (19) comportant quatre parois extérieures (20, 21, 22, 23) et une plaque de fond, **caractérisé en ce que** les parois extérieures (20, 21, 22, 23) sont couplées avec un assemblage (3) selon au moins la revendication 1.
